# EUROPEAN PATENT APPLICATION

(11) **EP 2 940 535 A2**
(43) Date of publication of application: **04.11.2015**
(21) Application number: 15165024.9
(22) Date of filing: 24.04.2015
(51) Int. Cl.: G04G 17/06, G04G 17/08, H01Q 1/27, G04R 60/00

(54) **SIGNAL LINES IN WRIST APPARATUS**

(30) Priority: 29.04.2014 US 201414265067
(71) Applicant: Polar Electro Oy, 90440 Kempele (FI)
(72) Inventor: Majava, Ville, 90440 Kempele (FI); Sorvala, Juha, 90440 Kempele (FI); Kuosmonen, Atte, 90440 Kempele (FI)
(74) Representative: Kolster Oy Ab

(57) **Abstract**

This document discloses a wrist apparatus comprising: a frame arranged to house at least one electronic circuitry of the wrist apparatus; and at least one antenna integrated on a surface of the frame with a laser direct structuring process in which conductive material is disposed at laser-defined locations on the frame.

## Description

### TECHNICAL FIELD

The present invention relates to wrist devices such as wrist computers and, particularly, implementation of signal lines in the wrist devices.

### TECHNICAL BACKGROUND

A wrist device comprising an electronic circuitry typically comprises signal lines connecting, for example, exposed user interface components such as a display or a button with a processor housed inside a casing of the wrist device.

### BRIEF DESCRIPTION

According to an aspect of the invention, there is provided a wrist apparatus comprising: a frame arranged to house at least one electronic circuitry of the wrist apparatus; and at least one antenna integrated on a surface of the frame with a laser direct structuring process in which conductive material is disposed at laser-defined locations on the frame.

### BRIEF DESCRIPTION OF THE DRAWINGS

In the following the invention will be described in greater detail by means of preferred embodiments with reference to the accompanying drawings, in which
Figure 1 illustrates a frame of a wrist apparatus comprising an antenna according to an embodiment of the invention;
Figure 2 illustrates an embodiment of a signal line routed from the frame to a signal processing circuitry inside the frame;
Figure 3 illustrates another embodiment of an antenna formed on the frame;
Figure 4 illustrates an embodiment for providing signal lines routed on surfaces of the wrist apparatus and connecting a signal connector to the circuitry;
Figure 5 illustrates another embodiment for providing signal lines routed on surfaces of the wrist apparatus and connecting user interface elements with the circuitry;
Figure 6 illustrates an embodiment for providing signal lines routed on surfaces of the frame and in a strap of the wrist apparatus;
Figure 7 illustrates a strap comprising signal lines according to an embodiment of the invention; and
Figure 8 illustrates an intermediate layer for the strap of Figure 7.

### DETAILED DESCRIPTION OF THE INVENTION

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

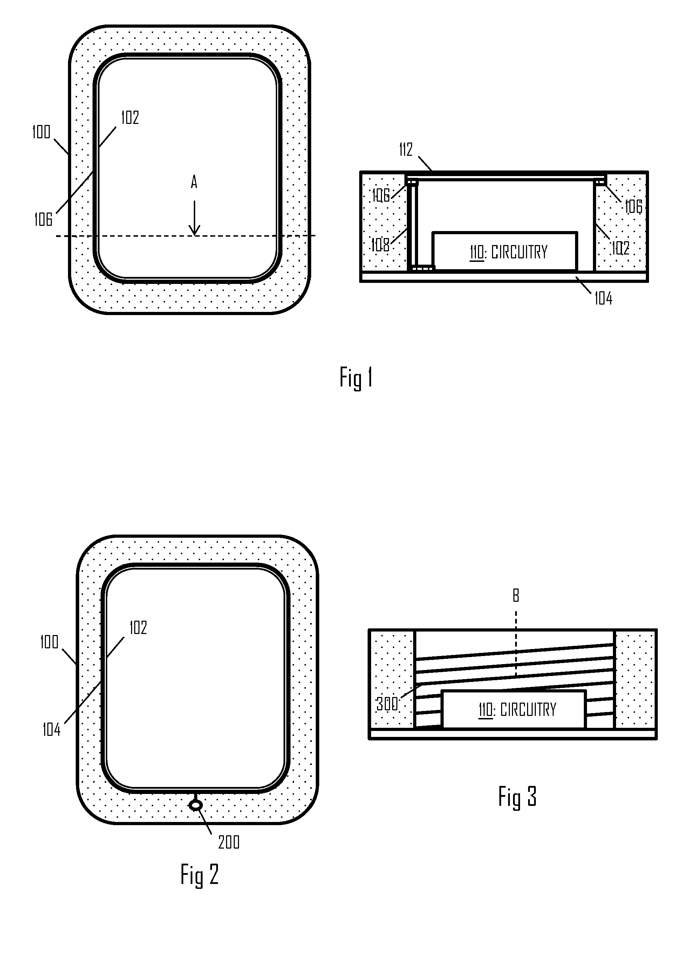

Figure 1 illustrates a top view (left hand side) and a cross-sectional side view (right hand side) of a wrist apparatus according to an embodiment of the invention. The top view or the top side of the wrist apparatus may refer to the side from which the user operates the wrist apparatus. Typically, the top side comprises a display of the wrist apparatus. The bottom side of the wrist apparatus may be the side contacting the user's wrist. The side view is shown as viewed to the direction illustrated by "A" in Figure 1. The wrist apparatus may comprise a casing and a strap or another mechanism configured to attach the wrist apparatus to a user's wrist. Referring to Figure 1, the casing may comprise a frame 100 arranged to house at least one electronic circuitry 110 of the wrist apparatus. The frame is illustrated in Figure 1 with the dotted area. A back plate or a base 104 may be attached to the frame 100 to provide support for the electronic circuitry 110. The base 104 may comprise a printed circuit board, for example. A back plate of the casing may be attached to the base to protect the electronics.

The frame 100 may be circumferential in the sense that it forms a perimeter enclosing a compartment when viewed from the top (left hand side of Figure 1), and the electronic circuitry 110 and, optionally, other components may be accommodated in the compartment formed by the frame 100. The shape of the frame may be arbitrary, e.g. rectangular as shown in Figure 1, circular, or oval.

The frame 100 comprises a plurality of surfaces and the frame 100 may be designed to accommodate at least some components of the wrist apparatus. As shown on the right hand side of Figure 1, the frame 100 may form a step on its inner surface, thus narrowing the circumference of the frame 100 in a top portion of the frame. The step may provide a mechanical support for a glass 112, lens, or another protective element protecting a display unit of the wrist apparatus. In some embodiments, the display unit may be accommodated in this manner.

The frame 100 may have at least one antenna integrated on a surface of the frame 100 with a laser direct structuring (LDS) process in which conductive material is disposed at laser-defined locations on the frame. The antenna may be disposed on one or more surfaces of the frame 100. In the embodiment of Figure 1, the antenna may be formed on a top side of the step (material shown with numeral 106), wherein the top side of the step may be defined as a surface contacting a bottom plane of the glass 112 or the lens to the step. Additionally, the antenna may be formed on an inner side surface of the frame on opt of the step, e.g. on a surface contacting an edge of the glass 112 or the lens. As a consequence, the antenna may be formed into a juncture or interface of two components, e.g. the frame and the glass 112 or the lens. Accordingly, the antenna is between the two components.

As shown on the left hand side of Figure 1, the signal line forming the antenna 106 may be designed to be circumferential or partly circumferential, depending on the desired antenna characteristics. In some embodiments, the antenna may be formed only on two sides perpendicular to each other to form an L-shaped antenna, for example. Other shapes are equally possible, e.g. G-shape.

It is possible to create very thin metallic or conductive structures with the LDS technique and, accordingly, use of the LDS technique provides versatility to the design of conductive signal lines in the wrist apparatus. With respect to the LDS process in general, a pattern or traces complying with the designed routing and locations of the signal lines may be drawn to a substrate, e.g. the frame 100, by using a laser. The substrate may be of thermoplastic material such as liquid crystal polymer (LCP), polycarbonate / Acrylonitrilebutadiene Syrene (PC/ABS), or polyethylene terephthalate / polybutylene terephthalate (PET/PBT). The substrate may be doped with additive material that may be activated with the laser. The substrate may be moulded to a desired shape to form the frame 100, for example. The physical-chemical reaction triggered by the laser forms a nuclei or a base for the metallic signal lines. Subsequently, the conductive material may be embedded to the frame 112 in a plating or metallization process in which at least one layer of conductive material is plated on the frame. The plating or metallization may be realized by electrolysis bathing, e.g. a copper bath. The metallic plating attaches only to the locations marked with the laser, thus forming the designed signal lines. The at least one layer of conductive material may comprise copper layer and, optionally, one or more other layers. In an embodiment, the copper plating may be coated with an application-specific coating. In an embodiment, the at least one layer comprises one copper layer (30 micrometre thickness), one nickel layer (15 micrometre thickness) and, optionally, a gold layer on top of these layers.

Referring to Figure 1, one or more signal lines 108 connecting the antenna 106 to the electronic circuitry 110 may be disposed on the one or more surfaces of the frame. The base 104 may comprise a connector configured to attach to the frame 110 in a frame portion where the signal line 108 is provide, thus providing the connectivity. In the embodiment of Figure 1, the signal line 108 connecting the antenna 106 to the circuitry 110 is provided on the inner surface of the circumference of the frame 100.

In another embodiment, the signal line 108 connecting the antenna 106 to the electronic circuitry 110 may be routed via an outer surface of the circumference of the frame. In such an embodiment, the signal line 108 may be routed through the juncture between the frame 100 and the base 104.

In an embodiment illustrated in Figure 2, the signal line 108 connecting the antenna 106 to the electronic circuitry 110 is routed through a through hole 200 formed into the frame 100. The through hole may be drilled to the frame structure 100 and it may have a dimension of one or two millimetres, for example. The laser treating may be focused to the inner surface of the hole 200, thus effectively causing the signal line to travel through the hole 200 from one side of the frame to another, e.g. from the top side to the bottom side. After the signal line has been formed with the laser treatment and the conductive layer plating to the surfaces of the hole in the LDS process, the hole 200 may be sealed with water-resistant material to realize a water-resistant or even water-proof signal connection through the frame.

In an embodiment illustrated in Figure 3, a coil antenna 300 may be realized with the LDS technique on the one or more surfaces of the frame 100. The coil antenna may be used in wireless communications according to near-field communications (NFC) or Qi technology, for example. In the embodiment of Figure 3, the coil antenna 300 is realized with the LDS technology on the inner surface of the frame 100. The coil may twine around the inner surface of the frame and along an axis "B" of the compartment enclosed by the frame 100, as shown in Figure 3. In this embodiment, the coil may form a spring having a constant diameter. In another embodiment, the coil may be formed on a surface of the frame into a form of a spiral, e.g. on a top side of the frame. Additionally, a signal line connecting the coil antenna to the circuitry 110 may be provided, also with the LDS technology.

The circuitry 110 may comprise at least one processor, at least one memory, and at least one wireless communication circuitry. The wireless communication circuitry may comprise with specifications of one or more radio communication technologies, e.g. the NFC, Qi, Bluetooth, Bluetooth Smart, Global Navigation Satellite System (GNSS), or Ant or Ant+. The antenna may be designed according to the characteristics of the supported radio communication technology. The wireless communication circuitry may be configured to establish a communication connection with one or more sensor units. The sensor units may comprise a heart rate transmitter attached to the user's chest, a pedometer or a motion sensor attached to the user's body, a training sensor attached to exercise equipment such as a bicycle or a gym device. The wireless communication circuitry may be configured to receive measurement data from the one or more sensor units and output the received sensor data to the processor. The processor may compute various parameters from the received measurement data and configure a display unit of the wrist apparatus to display the computed parameters. Accordingly, the wrist apparatus may be a training computer. In other embodiments, the wrist apparatus is a smart watch comprising a mobile operating system such as Android Wear.

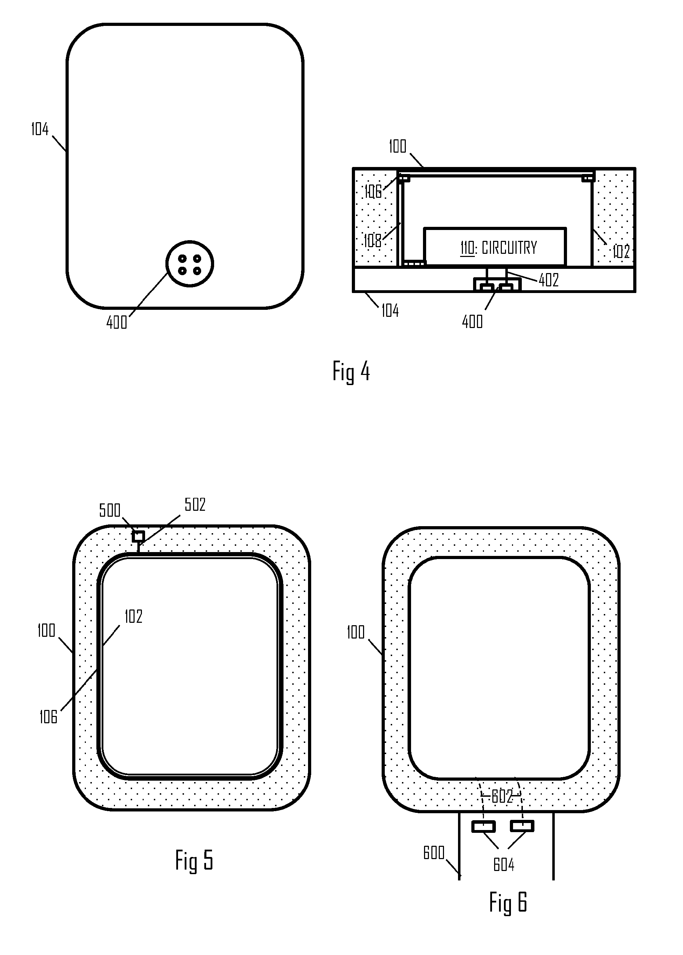

In the above-described embodiments, the conductive material formed on the surface(s) of the frame 100 in the LDS process comprises one or more antennas. As already indicated above, electric conductors (e.g. the signal line 108) in general may be formed on the surface(s) of the frame 100 with the LDS technique. This enables convenient routing of signal lines on the frame 100 by printing the traces on the surfaces of the frame and by plating the traces with the conductive material. The frame 100 may be rigid material and, as a consequence, it provides a stable and reliable base for the signal lines, thus improving reliability of the signal lines. In the embodiment of Figure 4, a signal connector 400 is provided on a back or bottom side of the wrist apparatus. In an embodiment, thesignal connector 400 is a data interface connector. The signal connector may be a universal serial bus (USB) connector enabling a data interface connection with a computer to be formed. In an embodiment, electric conductors of the connector 400 and/or signal lines 402 connecting the connector 400 to the circuitry 110 may be realized on the base and, through the base by employing the LDS technique. Through holes formed for the signal lines 402 on the base 104 may be sealed in the above-described manner. The connector 400 may be covered by a back cover of the wrist apparatus, or the connector may be exposed on the surface of the back cover, depending on the embodiment.

In the embodiment of Figure 5, a signal line may be formed from the circuitry 110 inside the frame 100 to a surface of the frame 100 that is exposed when the wrist apparatus is in use and attached to the wrist. An example of such a surface is the top surface of the frame 100, as illustrated in Figure 5. In the embodiment of Figure 5, a signal line formed on the surfaces of the frame 100 with the LDS technique may connect the circuitry 110 to a user interface element 500. The user interface element 500 may be a button or another user input element, a light emitting diode (LED) or another display element, or a sensor. Examples of the sensor may comprise a light sensor, a touch sensor, a heart activity sensor and a proximity sensor. The proximity sensor may sense the proximity of a user input entity such as a finger, and the proximity sensing may be based on capacitive sensing, for example. The proximity sensor itself may also be integrated into the frame with the LDS technique. The proximity sensor may be made of any material providing a capacitive coupling with the user input entity or another entity whose proximity is being detected. In some embodiments, the proximity sensor may be realized by a capacitor terminal. In other embodiments, the proximity sensor may be realized by an antenna. The circuitry 110 may then process the output of the proximity sensor representing the capacitive coupling between the proximity sensor and the entity and determine the proximity of the entity from the output.

With respect to the heart activity sensor, one electrode of the heart activity sensor may be provided on an exposed surface of the frame 100, e.g. on a top or side surface of the frame 100, and the signal line formed with the LDS technique may electrically connect the sensor to the circuitry 110. The signal line may be routed from the exposed surface of the frame 100 to an unexposed surface of the frame 100 via through hole provided in the frame 100 and/or over the surfaces of the frame, depending on the embodiment. A second electrode of the heart activity sensor may be provided on an unexposed surface of the wrist apparatus, e.g. on a surface that contacts the user's wrist at a portion where the pulse is felt. The surface may be provided on a strap of the wrist apparatus, for example. In such an embodiment, the signal line connecting the second electrode electrically to the circuitry 110 may be provided inside the strap. This may be realized with the LDS technique by forming the strap from a plurality of layers, for example. One layer may serve as a substrate layer for the signal lines and, after forming the signal lines on the substrate layer with the LDS technique, the substrate layer may be covered by a protective layer protecting the signal lines.

Figure 6 illustrates an embodiment where the strap 600 comprises user interface elements 604, e.g. user input elements, display elements, or sensors. Signal lines 602 connecting the user interface element 604 to the circuitry 110 may be provided on the frame 100 and on or inside the strap 600. The signal lines may be made water-proof in the above-described manner by providing them inside the strap and via water-proof holes or covering on the frame 100.

In yet another embodiment, one or more user interface elements may be provided inside the structure of the frame 100. An example of such a user interface element is a buzzer or a vibration element causing the frame to vibrate according to a signal output from the circuitry 110. In such an embodiment, the signal lines connecting the circuitry 110 to the user interface element inside the frame 110 may be formed with the LDS technique on the frame. After the frame 100 has been molded and a compartment for the user interface element has been formed in the frame 100, a signal line connecting the compartment to the circuitry 110 may be formed with the LDS technique on the surface(s) of the frame 100.

As described above, the LDS technique enables routing of signal lines to arbitrary locations on the frame and on the strap of the wrist apparatus. Accordingly, the frame and the strap may be used as the base for the signal lines, and the need for a printed circuit board or wires may be eliminated, thus improving the reliability of the wrist apparatus and space needed for the signal lines. It also provides significant freedom in the design because the conductors provided with the LDS technique require only a minimal space.

As described above in connection with Figure 6, the LDS technique may be employed in forming the signal lines inside the strap 600 of the wrist apparatus. Similarly, the LDS technique may be employed in forming the signal lines inside another strap, e.g. a strap of a heart rate transmitter arranged to measure heart activity from a user's chest. Accordingly, the strap may be designed to be attached to the chest. Other straps are equally applicable as the base for the signal lines realized with the LDS technique.

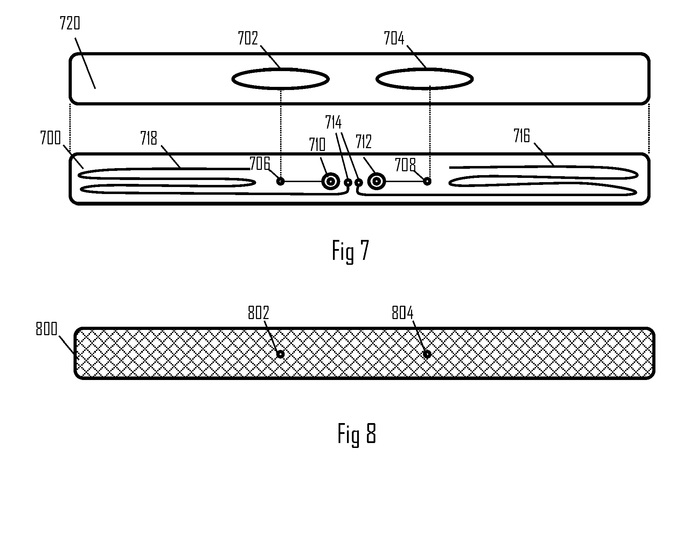

Figure 7 illustrates an embodiment of a strap comprising a first layer serving as a substrate layer. The substrate layer may be made of a material suitable for the LDS substrate. Signal line patterns may be formed on the substrate layer by using the laser treatment in the above-described manner and the signal lines may be plated on the substrate layer to comply with the signal line patterns. The strap may comprise a second layer serving as a protective layer, and the second layer may be attached to the first layer such that the second layer covers the signal lines. The second layer may also contain signal lines or other electrically conductive elements formed on its surface with the LDS technique. Depending on the embodiment, the electrically conductive elements may be formed on the surface contacting the first layer and/or on the opposite surface.

Referring to Figure 7, layer 700 may be the first layer and layer 720 may be the second layer. The second layer 720 may comprise one or more electrodes 702, 704 formed on its surface contacting the user's skin by employing the LDS technique. A signal line through the second layer 720 may be provided at the locations of the electrodes 702, 704 and, at the corresponding locations of the first layer 700, signal connectors 706, 708 and signal lines may be formed with the LDS technique to provide electrical coupling from the electrodes 702, 704 to the first layer 700. The signal lines 706, 708 may route the electric coupling in the first layer to electromechanical connectors 710, 712 to which an electronic circuitry of the heart rate transmitter is attached. The electromechanical connectors 710, 712 may comprise press stud (snap fastener) elements.

The signal lines 706, 708 and the electromechanical connectors 710, 712 may conduct the signals between the electrodes 702, 704 and a signal processing circuitry comprised in a casing attachable to the electromechanical connectors 710, 712. In another embodiment, signal lines conducting signals between the signal processing circuitry and a user interface apparatus such as the wrist apparatus may be formed on the first layer by employing the LDS technique. Referring again to Figure 7, an antenna may be formed on the first layer by using the LDS technique. One or more antenna terminals 714 may be provided on the first layer at a location where antenna terminals of the casing attached to the electromechanical connectors 710, 712 is located. Then, one or more antennas 716, 718 may be provided on the first layer as connected to the antenna terminal(s) 714. The antennas may be formed on the first layer with the LDS technique.

As described above, the second layer may serve as the protective layer for the signal lines 706 to 718. The electromechanical connectors 710, 712 may be exposed on a surface of the first layer 700 which is opposite to the surface contacting the second layer 720 such that the casing is attached to the opposite side of the strap with respect to the electrodes 702, 704.

In an embodiment, an intermediate layer is provided between the first layer 700 and the second layer 720, wherein the intermediate layer provides electromagnetic protection between the electrodes 702, 704 and the antenna(s) 716, 718. Figure 8 illustrates an embodiment of the intermediate layer 800. The intermediate layer 80 may comprise conductive elements throughout the layer 800, as illustrated with the diagonal lining. The conductive elements may form the electromagnetic protection between the layers 700, 720 by employing the Faradays cage effect. Accordingly, interference on the electrodes 702, 704 caused by the radiation by the antennas 716, 718 will be reduced. The conductive elements on the intermediate layer may be formed with the LDS technique as well. Conductive through holes 802, 804 may be provided through the intermediate layer at the location of the signal connectors 706, 708, thus providing for the electric coupling between the electrodes and the signal processing circuitry through the intermediate layer.

It will be obvious to a person skilled in the art that, as the technology advances, the inventive concept can be implemented in various ways. The invention and its embodiments are not limited to the examples described above but may vary within the scope of the claims.

## Claims

1. A wrist apparatus comprising:
a frame arranged to house at least one electronic circuitry of the wrist apparatus; and
at least one antenna integrated on a surface of the frame with a laser direct structuring process in which conductive material is comprised at laser-defined locations on the frame.

2. The wrist apparatus of claim 1, wherein at least part of the antenna is formed into a juncture between the frame and a lens disposed on the frame.

3. The wrist apparatus of claim 1 or 2, wherein the frame comprises a through hole and wherein a signal line created with the laser direct structuring process extends on a surface of the through hole and through the through hole from said surface onto an opposite surface of the frame.

4. The wrist apparatus of claim 3, wherein the through hole is sealed to be waterproof.

5. The wrist apparatus of any preceding claim, wherein the antenna forms a coil.

6. The wrist apparatus of claim 5, wherein the frame has a circumferential shape and wherein windings of the coil are arranged onto an inner surface of the circumference.

7. The wrist apparatus of any preceding claim, further comprising:
at least one user interface component disposed on an outer surface of the wrist apparatus; and
a processor housed inside the frame, wherein the frame further comprises at least one electrically conductive signal line integrated into the frame with the laser direct structuring technique and connecting the at least one user interface component to the processor.

8. The wrist apparatus of claim 7, wherein the conductive signal line connects a touch-sensitive element to the processor.

9. The wrist apparatus of claim 8, wherein the touch-sensitive element is integrated into the frame with the laser direct structuring process.

10. The wrist apparatus of claim 7, wherein the conductive signal line connects an electrode to the processor.

11. The wrist apparatus of claim 10, wherein a first signal line connects a first electrode, exposed when the wrist apparatus is attached to a wrist, to the processor, and a second signal line connects the processor to a second electrode contacting the wrist when the wrist apparatus is attached to the wrist.

12. The wrist apparatus of claim 7, wherein the conductive signal line connects a light indicator to the processor.

13. The wrist apparatus of claim 7, wherein the conductive signal line connects a light sensor to the processor.

14. The wrist apparatus of claim 7, wherein the conductive signal line connects a vibrating buzzer to the processor.

15. The wrist apparatus of claim 7, wherein the conductive signal line connects a data interface connector to the processor.
